# DEMANDE DE BREVET EUROPEEN

(11) **EP 1 528 781 A1**
(43) Date de publication de la demande: **04.05.2005**
(21) Numéro de dépôt: 04292561.0
(22) Date de dépôt: 28.10.2004
(51) Int. Cl.: H04M 17/00, H04M 15/00, H04M 15/28

(54) **Jauge des consommations pour terminal mobile**

(30) Priorité: 29.10.2003 FR 0312685
(71) Demandeur: Bouygues Telecom, 92100 Boulogne Billancourt (FR)
(72) Inventeur: Nivelet, Christophe, Bouygues Telecom, 92100 Boulogne-Billancourt (FR); Rorteau, Philippe, 75016 Paris (FR)
(74) Mandataire: Breese, Pierre

(57) **Abrégé**

La présente invention se rapporte à un procédé d'affichage d'un indicateur de consommation sur un terminal de télécommunications mobiles, caractérisé en ce qu'il comprend les étapes consistant à :
- extraire en temps réel d'une plate-forme du système d'information (SI) de l'opérateur de télécommunications mobiles des données relatives à la consommation d'un utilisateur ;
- transmettre à travers un réseau de télécommunications mobiles lesdites données relatives à la consommation de ladite plate-forme de SI vers ledit terminal ;
- afficher un indicateur représentatif desdites données relatives à la consommation de l'utilisateur.

La présente invention se rapporte également à un système pour la mise en oeuvre du procédé comprenant :
- un réseau de télécommunications mobiles et le système d'information qui lui est associé, de préférence le système d'information de valorisation ;
- au moins un terminal de télécommunications mobiles, dit *User Equipment.*

## Description

La présente invention se rapporte au domaine des télécommunications mobiles.

La présente invention se rapporte plus particulièrement aux interfaces des terminaux mobiles.

On connaît déjà le principe de la jauge de consommation, par exemple dans le domaine de l'automobile, notamment pour l'essence. Sur les équipements de télécommunications mobiles, il est par ailleurs classique d'observer un indicateur décrivant l'état de la batterie. Le concept de jauge permet à l'utilisateur d'anticiper les éventuelles ruptures (d'essence ou de batterie) et d'agir en conséquence.

Dans le domaine des indications de consommation dans les télécommunications mobiles, on connaît aussi les appels directs du consommateur à l'opérateur. Ces appels sont fastidieux, consomment du temps et sont bien souvent payants. De plus, un utilisateur peu attentif n'aura pas le réflexe de s'informer de sa consommation.

La présente invention entend remédier aux inconvénients de l'art antérieur en proposant une jauge représentative de la consommation sur un terminal mobile de façon à proposer une tarification transparente à l'utilisateur. Cette jauge de consommation se compose de deux éléments : une jauge permanente affichée de façon continue sur l'écran et une jauge détaillée, accessible via le mobile sur action du client.

À cet effet, la présente invention concerne, dans son acception la plus générale, un procédé d'affichage d'un indicateur de consommation sur un terminal de télécommunications mobiles, caractérisé en ce qu'il comprend les étapes consistant à :
- extraire en temps réel d'une plate-forme du système d'information (SI) de l'opérateur de télécommunications mobiles des données relatives à la consommation d'un utilisateur ;
- transmettre à travers un réseau de télécommunications mobiles lesdites données relatives à la consommation de ladite plate-forme de SI vers ledit terminal ;
- afficher un indicateur représentatif desdites données relatives à la consommation de l'utilisateur.

Selon une première variante, ledit terminal comporte une carte SIM, l'étape de transmission est réalisée sous forme de message transparent pour l'utilisateur et l'étape d'affichage s'effectue au moyen d'une application s'exécutant sur la carte SIM.

De préférence, l'application est écrite en langage Java (marque déposée par Sun Microsystems).

Selon un mode de mise en oeuvre, ledit message transparent pour l'utilisateur est du type SMS (Short Message Service).

Selon un second mode de mise en oeuvre, ledit message transparent pour l'utilisateur est du type MMS (Multimedia Message Service).

Selon un troisième mode de mise en oeuvre, ledit message transparent pour l'utilisateur est transmis au moyen du protocole USSD (*Unstructured Supplementary Service Data*).

Selon une seconde variante, ledit terminal comporte un navigateur et l'étape d'extraction de données dudit SI est accompagnée de la génération d'une page numérique, l'étape d'affichage consistant alors à afficher ladite page numérique générée sur le navigateur.

Selon une variante particulière, le navigateur et la page numérique sont compatibles I-Mode.

Selon une autre variante particulière, le navigateur et la page numérique sont compatibles Wap.

Selon une troisième variante, l'étape d'affichage s'effectue au moyen d'une application préalablement téléchargée sur ledit terminal, ladite application utilisant un langage du type « *markup language* » comme par exemple, mais non nécessairement, le langage HTML.

L'invention se rapporte également à un système pour la mise en oeuvre du procédé comprenant :
- un réseau de télécommunications mobiles et le système d'information qui lui est associé, de préférence le système d'information de valorisation ;
- au moins un terminal de télécommunications mobiles, dit *User Equipment.*

On comprendra mieux l'invention à l'aide de la description, faite ci-après à titre purement explicatif, d'un mode de réalisation de l'invention, en référence aux figures annexées où :
- la figure 1 illustre un exemple de jauge permanente pour un terminal acceptant un affichage graphique ;
- la figure 2 illustre des modèles possibles d'affichage graphique de la jauge permanente ;
- la figure 3 illustre un exemple de jauge permanente pour un terminal n'acceptant qu'un affichage en mode texte, pour une offre de type forfait ;
- la figure 4 illustre un exemple de réalisation de jauge détaillée pour une offre de type prépayé ;
- la figure 5 illustre le mode d'actualisation des jauges d'un GSM à partir des données utilisateurs de l'opérateur ;
- la figure 6 illustre le mode d'actualisation des jauges d'instruments de téléphonie mobile (GSM, MMS, I-Mode) à partir des données utilisateurs de l'opérateur.

Nous allons décrire un mode de réalisation dans lequel le terminal de télécommunications mobiles est muni d'une carte SIM et un message transparent de type SMS est envoyé à l'utilisateur. Il est entendu que cet exemple n'est en aucun cas limitatif et que l'homme du métier saurait réaliser d'autres variantes.

Pour les clients possédant une offre de type forfait, la jauge permanente rend compte du coût total des dépenses engagées sur la période de facturation en cours. Le coût total engagé est alors calculé de la façon suivante : coût total engagé à l'instant T= forfait + services souscrits + consommations hors forfait à l'instant T. La jauge permanente n'affiche pas la valeur numérique de ce coût mais la rapporte à un montant maximum de facturation toléré. C'est ce ratio qui définit le contenu de la jauge permanente. Le seuil maximum sera défini par l'utilisateur par le menu SIM du mobile. Une fois le seuil maximum atteint, la jauge apparaît pleine, mais le diagramme ne s'allonge pas.

La représentation graphique des informations de consommation par une jauge implique la prise en compte des contraintes suivantes : le terminal supporte l'affichage ou non d'icône, la résolution de l'affichage permet ou non un rendu graphique acceptable. La représentation graphique ne s'applique qu'aux terminaux pouvant afficher une icône associée à la commande SET_IDLE_MODE_TEXT. La position de l'icône est alors déterminée par le terminal et non l'applet. Le nombre de points affectés à l'icône est directement lié à la place mémoire occupée sur la carte par les fichiers correspondants. Ainsi, pour une résolution de type X x Y, X*Y/8 octets sont nécessaires. Une résolution de jauge de 10% est de plus obtenue avec onze jauges.

Pour les clients possédant une offre de type prépayée, la jauge permanente rend compte du coût de consommation depuis le dernier rechargement selon la formule suivante : coût de consommation à l'instant T = services souscrits + consommations à l'instant T. La jauge permanente n'affiche pas la valeur numérique de cette consommation mais la rapporte au crédit de communication calculé lors du dernier rechargement. C'est donc ce ratio qui définit le contenu de la jauge permanente. À chaque rechargement, le montant du crédit de consommation est remis à jour et le coût de consommation est remis à zéro. Le chiffre correspondant au crédit est arrondi à l'entier le plus proche.

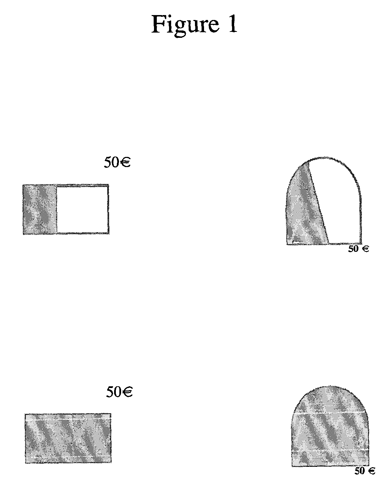

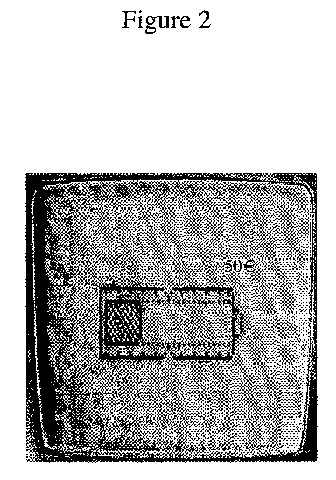

La jauge permanente de consommation doit être lisible quel que soit le terminal. Si possible, l'affichage de la jauge permanente se fera sous forme d'icône sur l'écran de veille (Figure 1), ou bien, si le terminal ne le permet pas, sous forme de texte sur l'écran de veille (Figure 2), ou bien, si le terminal n'est pas compatible avec de l'affichage à l'écran, les informations seront communiquées sous forme de SMS.

L'affichage de la jauge ne requiert pas de paramétrage par le client dans le cas d'une offre de type prépayée : c'est l'applicatif qui déclenchera l'affichage le plus approprié (taille de la jauge, police...).

La figure 2 illustre des modèles possibles d'affichage graphique de la jauge permanente.

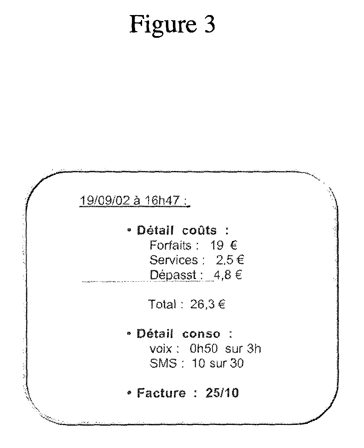

La figure 3 illustre un exemple de jauge permanente pour un terminal n'acceptant qu'un affichage en mode texte, pour une offre de type forfait.

La jauge détaillée rend compte d'informations numériques chiffrées. Cette jauge est accessible rapidement à partir du mobile : à partir d'un clic long sur une touche, ou dans un sous-menu « détail conso ». En en-tête de la jauge détaillée figurent la date et l'heure de la dernière valorisation des consommations. Pour les offres de type forfait, trois catégories de coût sont affichées par exemple en euros : forfaits, services, dépassement, puis deux catégories de consommation de type forfait sont affichées : voix et SMS. Si la valeur d'une catégorie est nulle, alors celle-ci n'est pas affichée. L'affichage de la jauge détaillée ne requiert pas de paramétrage par le client et c'est l'applicatif qui déclenche l'affichage le plus approprié.

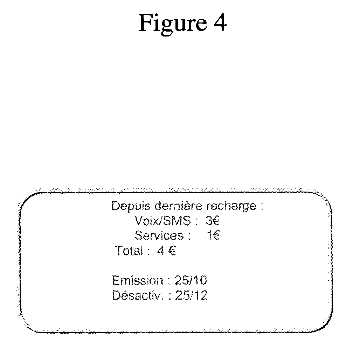

La figure 4 illustre un exemple de réalisation de jauge détaillée pour une offre de type prépayée.

Pour les offres de type prépayée, le détail des coûts de consommation selon la voix/SMS/MMS est indiqué, ainsi que les services. Par ailleurs, la date limite de validité du crédit du client ainsi que la date de clôture de la ligne lui seront indiquées.

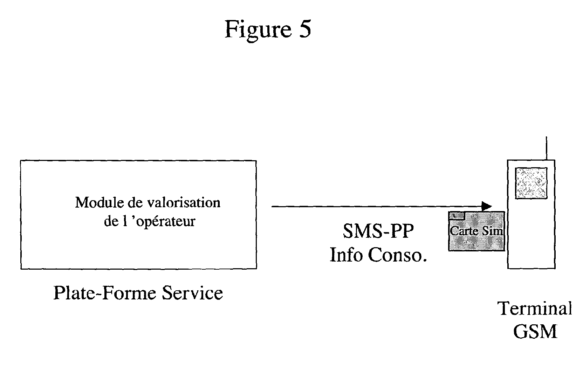

La figure 5 illustre le mode d'actualisation des jauges d'un GSM à partir des données utilisateurs de l'opérateur.

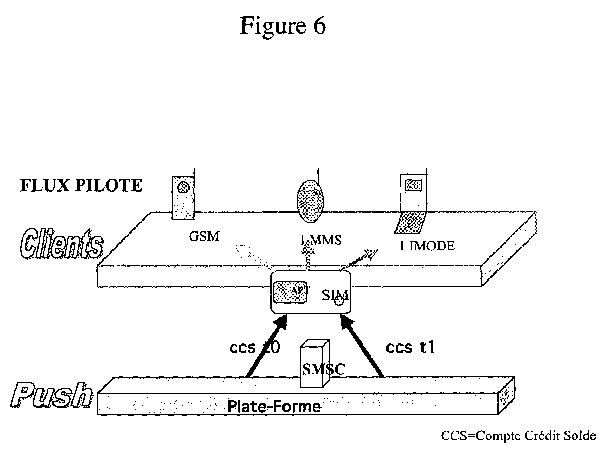

La figure 6 illustre le mode d'actualisation des jauges d'instruments de téléphonie mobile (GSM, MMS, IMODE, UMTS) à partir des données utilisateurs de l'opérateur.

La plate-forme de services envoie périodiquement les informations de consommation au mobile sous forme de Short Message Service - Point to Point (SMS-PP). Ces SMS-PP sont transparents pour l'utilisateur. Une application écrite en langage Java (marque déposée par Sun Microsystems) est déclenchée lors de la réception du message et stocke les informations de consommation contenues dans le message. L'applet envoie ensuite au terminal la commande de rafraîchissement de l'écran de veille afin d'afficher la jauge mise à jour. L'applet java peut aussi être déclenchée lors de la sélection de son item de menu principal de type SIM ToolKit (STK) par l'utilisateur.

Les informations de consommations des clients sont extraites du système d'information commercial au niveau du module de valorisation de l'opérateur.

Voici un exemple du fichier XML émis par le système de valorisation de l'opérateur :

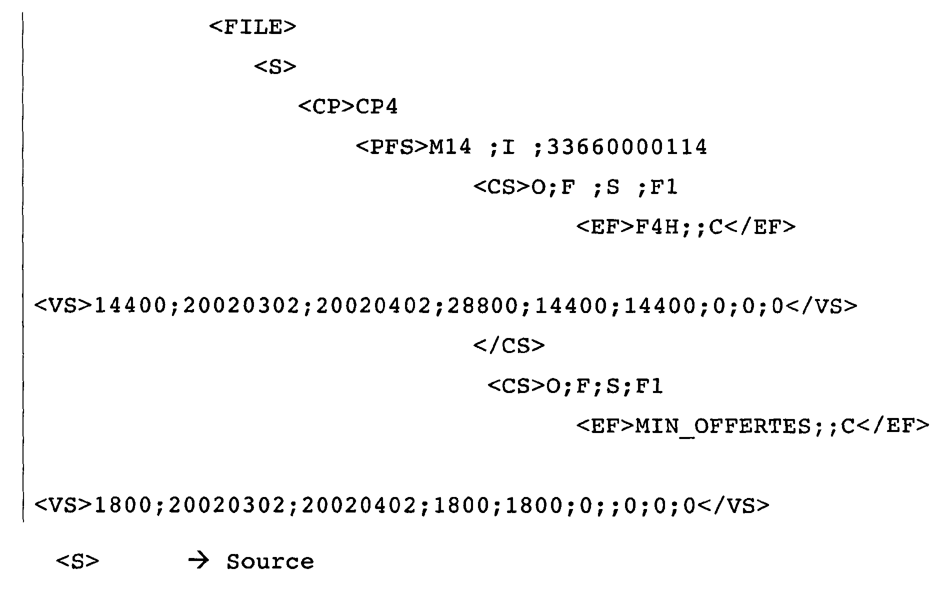

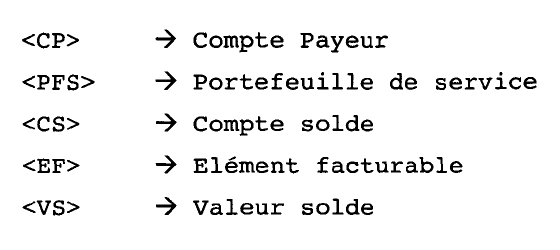

Les noeuds intéressants pour l'application de l'arbre XML sont donc :
<CP> → Contient les informations de consommation d'un ou plusieurs MSISDN rattaché à ce Compte Payeur.
<PFS> → Contient les différentes valeurs soldes (VS) rattachées à chaque MSISDN.
<VS> → Contient les valeurs de consommation pour chaque valeur solde (Forfaits voix, SMS, GPRS etc.).

Une application est développée de manière à stocker dans une base de données toutes ces informations pour chaque utilisateur et de pouvoir émettre un SMS vers le mobile de l'utilisateur afin de mettre à disposition de l'applet Java (sur la carte SIM) toutes ces données.

L'extraction des informations de consommation pour chaque client à partir des fichiers XML pourra être effectuée en passant ces fichiers via la technologie XSLT par exemple :

Un utilisateur est identifié dans le fichier XML par la balise <PFS> contenant le l'identifiant du client. Tous les éléments contenus sous cette balise concernent donc un client unique :

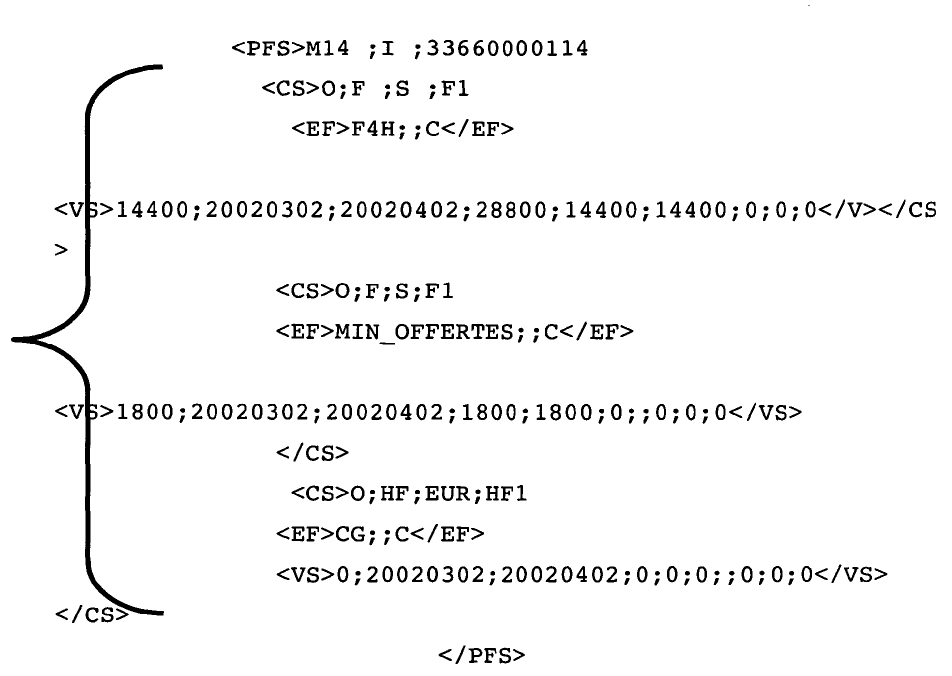

Chaque élément de consommation (Forfait Voix, Montant Hors Forfait, Forfait SMS, Forfait GPRS etc.) est identifiée par la balise <CS> (Compte Solde). Ainsi dans l'exemple suivant, le forfait principal est identifié par la balise <CS> contenant l'identifiant de forfait F1 avec comme unité de consommation S (La seconde). Tous les éléments contenus sous cette balise sont des éléments de consommation concernant uniquement le forfait F1 (Forfait Voix principal) :

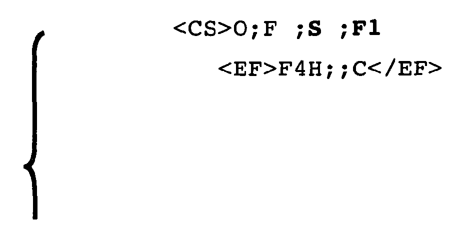

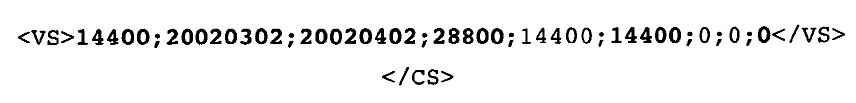

Ici, seule la balise <VS> est intéressante : elle représente les valeurs de consommation en seconde (S) du forfait voix principal (F1). On connaît donc (dans l'ordre par rapport à la ligne <VS>) le nombre d'unités consommées sur le forfait F1, la date de début et de fin de validité de cette consommation sur le forfait F1, le nombre d'unités disponibles, le report de minutes disponible et enfin le report de minutes consommé :

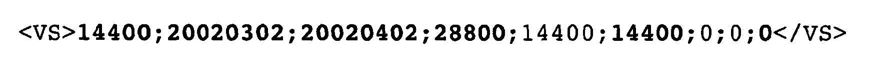

Cette valeur solde remise dans le contexte global du fichier d'exemple se lit donc comme suit : L'utilisateur **33660000114** a consommé, sur son forfait voix principal **F1**, **14400** secondes **(S)** (soit 4 heures) sur **28800** secondes disponibles (soit 8 heures) pour la période du **02/03/2002** au **02/04/2002**. Cet utilisateur a consommé 0 secondes sur son report de minutes de **14400** secondes (soit 4 heures).

La récupération des autres informations décrites plus haut (Montant des communications hors-forfait, Forfait SMS, Forfait GPRS etc.) pour réaliser le besoin de jauge Java se fera de la même manière que décrite pour le forfait voix principal en récupérant les autres balises <CS> rattaché à ce même MSISDN avec un identifiant à chaque fois spécifique (et autre que F1).

Toutes ces informations sont donc extraites du fichier XML de manière à être placées pour stockage dans une base de données. On peut imaginer le modèle de formatage des informations extraites :

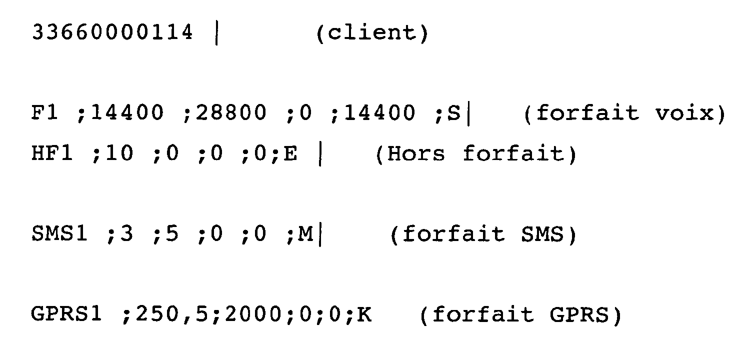

Où chaque élément ou forfait de consommation de l'utilisateur est situé entre caractères '|' avec pour chaque élément de consommation les valeurs suivantes : Identifiant forfait puis unités consommées puis unités disponibles puis report consommé puis report disponible et enfin l'unité de ces valeurs.

L'exemple ci-dessus se lit donc :
L'utilisateur 33660000114 possède :
   o Un forfait voix F1 sur lequel il a consommé 14400 sec sur son forfait de 28800 sec et pour lequel il possède un report de minutes de 14400 sec sur lequel il n'a rien consommé ;
   o Un montant de communication hors forfait de 10 euros ;
   o Un forfait SMS sur lequel il a consommé 3 Messages sur 5 Messages ;
   o Un forfait GPRS sur lequel il a consommé 250,5 Ko sur un forfait de 2000 Ko.

On peut donc envisager que l'application stocke ces informations dans une table d'une base de données.

Un SMS d'actualisation est transmis vers chaque utilisateur de la table utilisateur ayant pour contenu la chaîne de caractère décrivant sa consommation en respectant le protocole applicatif ci-dessus.

La mise à jour des données utilisées par l'applet Java (Sur la carte SIM) est transparente vis-à-vis de l'utilisateur final. Le type de SMS à envoyer vers le mobile de l'utilisateur est de type PPDownload.

L'invention est décrite dans ce qui précède à titre d'exemple. Il est entendu que l'homme du métier est à même de réaliser différentes variantes de l'invention sans pour autant sortir du cadre du brevet.

## Revendications

1. Procédé d'indication de consommation sur un terminal de télécommunications mobiles, **caractérisé en ce qu'**il comprend les étapes consistant à :
• afficher de façon permanente un indicateur de consommation sur l'écran dudit terminal de télécommunication
• extraire d'une plate-forme du système d'information (SI) de l'opérateur de télécommunications mobiles des données relatives à la consommation d'un utilisateur ;
• transmettre à travers un réseau de télécommunications mobiles lesdites données relatives à la consommation de ladite plate-forme de SI vers ledit terminal ;
• actualiser l'affichage dudit indicateur en fonction desdites données relatives à la consommation de l'utilisateur.

2. Procédé selon la revendication 1, **caractérisé en ce que** ledit terminal comporte une carte SIM, **en ce que** l'étape de transmission est réalisée sous forme de message transparent pour l'utilisateur et ce que l'étape d'affichage s'effectue au moyen d'une application s'exécutant sur la carte SIM.

3. Procédé selon la revendication 1, **caractérisé en ce que** ledit terminal comporte un navigateur et **en ce que** l'étape d'extraction de données dudit SI est accompagnée de la génération d'une page numérique, l'étape d'affichage consistant alors à afficher ladite page numérique générée sur le navigateur.

4. Procédé selon la revendication 1, **caractérisé en ce que** l'étape d'affichage s'effectue au moyen d'une application préalablement téléchargée sur ledit terminal, ladite application utilisant un langage du type « *markup language* » comme par exemple, mais non nécessairement, le langage HTML.

5. Procédé selon la revendication 2 ou 4, **caractérisé en ce que** l'application est écrite en langage Java (marque déposée par Sun Microsystems).

6. Procédé selon la revendication 2, **caractérisé en ce que** ledit message transparent pour l'utilisateur est du type SMS (Short Message Service).

7. Procédé selon la revendication 2, **caractérisé en ce que** ledit message transparent pour l'utilisateur est du type MMS (Multimedia Message Service).

8. Procédé selon la revendication 2, **caractérisé en ce que** ledit message transparent pour l'utilisateur est transmis au moyen du protocole USSD (*Unstructured Supplementary Service Data*).

9. Procédé selon la revendication 3, **caractérisé en ce que** le navigateur et la page numérique sont compatibles I-Mode.

10. Procédé selon la revendication 3, **caractérisé en ce que** le navigateur et la page numérique sont compatibles Wap.

11. Système pour la mise en oeuvre du procédé selon l'une quelconque des revendications précédentes comprenant :
• un réseau de télécommunications mobiles et le système d'information qui lui est associé, de préférence le système d'information de valorisation ;
• au moins un terminal de télécommunications mobiles, dit *User Equipment.*
